(19) **Europäisches Patentamt**

**European Patent Office**

**Office européen des brevets**

(11) **EP 0 599 334 B2**

(12) ## NEUE EUROPÄISCHE PATENTSCHRIFT

(45) Veröffentlichungstag und Bekanntmachung des Hinweises auf die Entscheidung über den Einspruch:
**02.07.2003   Patentblatt 2003/27**

(45) Hinweis auf die Patenterteilung:
**02.04.1997   Patentblatt 1997/14**

(51) Int Cl.[7]: **H02P 6/00**, H02P 7/00

(21) Anmeldenummer: **93119063.1**

(22) Anmeldetag: **25.11.1993**

(54) **Verfahren zum Ansteuern eines Reluktanzmotors**

Method for driving a reluctance motor

Procédé d'entraînement d'un moteur à reluctance

(84) Benannte Vertragsstaaten:
**DE ES FR GB IT**

(30) Priorität: **26.11.1992   DE 4239668**

(43) Veröffentlichungstag der Anmeldung:
**01.06.1994   Patentblatt 1994/22**

(73) Patentinhaber: **DaimlerChrysler AG
70567 Stuttgart (DE)**

(72) Erfinder: **Orthmann, Reinhard, Dr.
D-55124 Mainz (DE)**

(74) Vertreter: **Kolb, Georg et al
DaimlerChrysler AG
Intellectual Property Management
Sedanstrasse 10
Geb. 17
89077 Ulm (DE)**

(56) Entgegenhaltungen:
**EP-A- 0 476 751          DE-A- 3 819 097
DE-A- 3 940 569          US-A- 5 084 662**

- **T.J.E. MILLER 'Brushless Permanet-Magnet and Reluctance Motor Drives' 1989 , CLARENDON PRESS , OXFORD * Seite 173 - Seite 180; Abbildung 7.16 ***
- **IEEE Trans. on Industry Applications, Vol.25, Nr.13, 1989. Y.Murrai u.Tocque Ripple"Improvement for BrushlessDC Miniature Motors", pp 441,450.**

**Beschreibung**

Die Erfindung geht aus von einem Verfahren zum Ansteuern eines Reluktanzmotors.

Eine Schaltungsanordnung zum Ansteuern eines Reluktanzmotors ist beispielsweise aus der europäischen Patentanmeldung EP 0 476 751 bekannt. In dieser Anmeldung wird eine Schaltungsanordnung zum Kommutieren eines Reluktanzmotors mit einem Stator beschrieben, der in einer zyklischen Anordnung mit Wicklungen versehen ist, in die in einem bewegungsabhängigen Zyklus Stromimpulse vorgebbarer Länge und Lage eingespeist werden. Dabei werden bei Bewegungsgeschwindigkeiten oberhalb eines vorgebbaren Werts nach jedem eingespeisten Stromimpuls wenigstens der in der für niedrige Bewegungsgeschwindigkeiten vorgebbaren zyklischen Folge sich anschließende Stromimpulse ausgelassen. Ein Nachteil der zugehörigen Schaltungsanordnung ist der hohe Aufwand, welcher für die Elektronik getrieben werden muß.

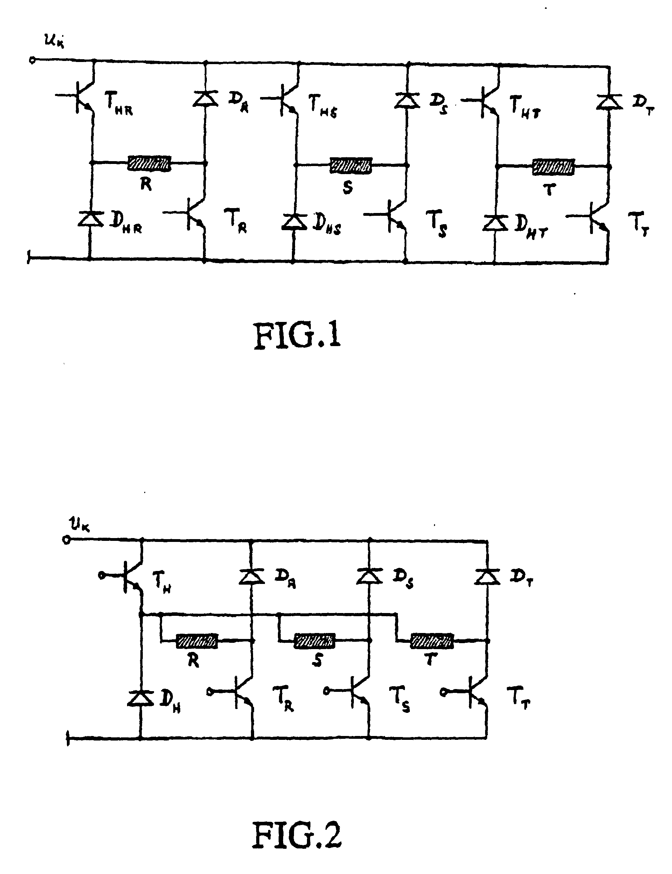

Die klassische Wechselrichtertopologie für dreisträngige geschaltete Reluktanzmotoren besteht aus sechs Leistungsschaltern (s. Fig. 1). Sie setzt sich aus drei voneinander unabhängigen unsymmetrischen H-Brücken zusammen. Der obere Leistungsschalter jeder H-Brücke in Verbindung mit der unteren Diode sorgt für die Regelung des Stromes im angeschlossenen Wicklungsstrang. Der untere Leistungsschalter in Verbindung mit der Diode oben ermöglicht beim übergang von einem Motorstrang auf einen anderen eine schnelle Abkommutierung gegen die volle Versorgungsgleichspannung $U_K$.

Der Gesamtaufwand für das Leistungsstellglied geschalteter Reluktanzmotoren liegt in der vergleichbaren Größenordnung zum Aufwand für die Leistungsstellglieder von Asynchron- oder Synchronmaschinen.

Der Vorteil dieser Topologie ist die vollkommene Entkopplung der Motorstränge voneinander. Die Schaltvorgänge in einem strang beeinflussen die möglichen Schalthandlungen in den anderen Motorsträngen nicht.

Störend bei dieser Topologie ist die Existenz von drei Leistungsschaltern auf Hochpotential. Diese anzusteuern und zu überwachen, ist sowohl mit hohem Aufwand verbunden als auch kostenintensiv, insbesondere, wenn die Ansteuerschaltungen der Leistungsschalter integriert werden sollen. Darüberhinaus sind zusätzliche potentialfreie Energieversorgungen erforderlich und die Steuer- und Meßsignale sind störsicher und genau über die springenden Potentiale zu übertragen.

In der Ansteuerelektronik des Reluktanzmotors wurden durch die Verfügbarkeit abschaltbarer Leistungsschalter neuartige Schaltungstopologien möglich. Ein solcher Schaltkreis ist in dem Buch von T.J.E. Miller "Brushless Permanent Magnet and Reluctance Motor Drives", Clarendon Press, Oxford 1989, S. 177, beschrieben.

Daraus ist bekannt, bei Leistungsschaltern, welche sich in der klassischen Art auch auf einem hohen Potential befinden, eine einfachere Lösung anzuwenden. Diese sieht auf der Hochpotentlalebene nur einen statt wie zuvor drei Leistungsschalter vor.

Hierbei werden jetzt die Wicklungsenden der drei Motorstränge zusammen an den verbleibenden oberen Leistungsschalter geführt (s. Fig. 2). Diese Topologie hat bislang keine Verbreitung gefunden, da sie steuerungstechnisch erhebliche Nachteile gegenüber der Sechs-Schalter-Topologie aufweist.

Die Nachteile dieser Topologle sollen infolgedessen anhand eines Kommutierungsvorgangs von einem Motorstrang auf einen anderen Motorstrang dargelegt werden:

Der Motor dreht sich mit konstanter Änderungsgeschwindigkeit des Rotordrehwinkelsγ, also mit konstanter Drehzahl n.

$$n = d\gamma/dt = \text{const.}$$

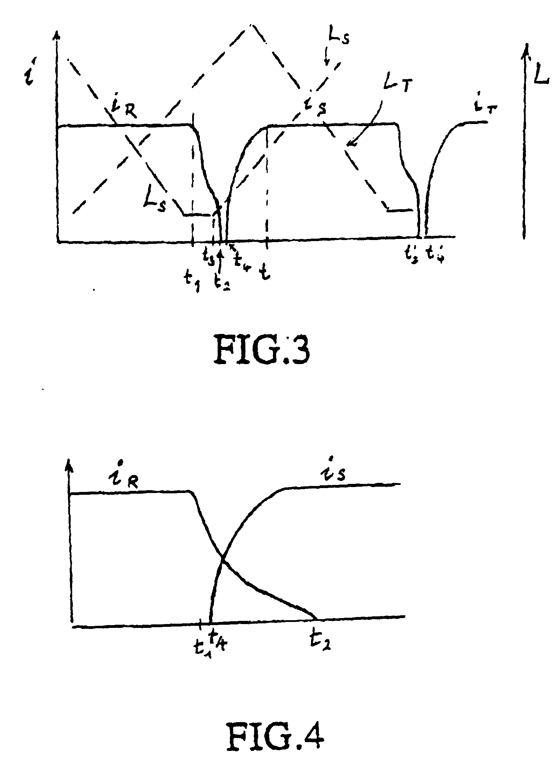

Strang R (s. Fig. 3) führt einen konstante, geregelten Strom i. Im Leistungsstellglied sind dazu der Schalter $T_H$ und $T_R$ geschlossen. Alle anderen Schalter sind geöffnet (Fig. 2).

Während der Stromleitdauer in diesem Strang wird Arbeit geleistet, Indem ein Ankerzahn angezogen wird. Dadurch steigt die Stranginduktivität L kontinuierlich an, wie Fig. 3 zeigt.

$$dL/d\gamma = \text{const.}$$

Dies führt bei konstant geregeltem Strangstrom zu einer gleichförmigen Drehmomententwicklung M(t).

$$M(t) = dL/d\gamma \cdot i(t)^2.$$

Zum Zeitpunkt $t = t_1$ soll der Strom im Strang R abkommutiert werden und im Strang S aufkommutiert werden. Dazu werden die beiden Schalter $T_H$ und $T_R$ geöffnet. Der Strom im Strang R fließt über die Dioden $D_H$ und $D_R$ in die Speisespannungsquelle zurück (s. Fig. 2). Erst zu dem Zeitpunkt, an dem der Strom zu Null geworden ist, d. h. vollständig abkommutiert worden ist, darf der Strang S bestromt werden. In Fig. 3 ist dieser Zeitpunkt mit $t_2$ bezeichnet.

Der Abkommutierungsvorgang muß vollständig beendet sein, bevor der Strang S eingeschaltet werden darf. Ein vorzeitiges Wiedereinschalten (s. Fig. 4) des Transistors $T_H$ beispielsweise in Verbindung mit $T_S$ führt zu einer starken Verlängerung des Abkommutierungsvorgangs, da dann statt der Versorgungsgleichspannung nur noch die Flußspannung der Diode $D_H$ als wirksame Abkommutierungsspannung zur Verfügung steht. Der Abkommutierungsvorgang verlängert sich, und es kommt infolge zu einer Erzeugung eines nennenswerten Bremsmoments. Die Gesamtausbeute an Drehmoment reduziert sich.

Nach dem vollständigen Stromabbau im Strang R darf nun der Stromaufbau im Strang S beginnen. Dies geschieht durch Schließen des Schalters $T_H$ und des Schalters $T_S$ bei t = $t_4$.

Der Strom im Strang S baut sich von Null beginnend entsprechend der wirksamen Stranginduktivität $L_S(\gamma)$ langsam auf. Zum Zeitpunkt t = $t_5$ erreicht er den gewünschten Endwert.

Bezüglich einer gleichförmigen Drehmomententwicklung ist im Strang S schon zum Zeitpunkt t = $t_3$ ein Strom in voller Höhe erforderlich, da zu diesem Zeitpunkt der Anstieg der Induktivität des Strangs S beginnt und damit die Erzeugung von motorischem Drehmoment einsetzt. Aufgrund der zuvor geschilderten Randbedingungen ist dies nicht möglich. Dadurch kommt es bei dieser Topologie des Leistungsstellglieds zu einer deutlichen Einbuße an mittlerem Drehmoment.

Darüberhinaus kommt es durch die starken Einbrüche im zeitlichen Verlauf des Drehmoments zwangsläufig zu Emissionen von akustischen Störstrahlungen. Auch entfällt die freie und entkoppelte Steuerungsmöglichkeit jedes Stranges.

Der Erfindung liegt die Aufgabe zugrunde, den Aufwand für das Leistungsstellglied so weit wie möglich zu reduzieren und die Ansteuerung der Leistungsschalter so zu optimieren, daß keine Einbrüche im zeitlichen Verlauf des Drehmoments des Motors auftreten.

Diese Aufgabe wird mit den im Anspruch 1 angegebenen Merkmalen gelöst. Welterbildungen der Erfindung sind in den Unteransprüchen gekennzeichnet.

Die Erfindung wird nachstehend anhand der Zeichnung näher erläutert.

Dabei zeigen:

Fig. 1 den Stand der Technik in der Anordnung der Schalter;
Fig. 2 eine einfache Form der Beschaltung;
Fig. 3 den zeitlichen Verlauf der Strangströme und -induktivitäten;
Fig. 4 einen ungünstigen Verlauf des Strangstromes;
Fig. 5 den Stromlauf beim Abkommutieren und
Fig. 6 die Schaltung nach Fig. 2 mit Detektor.
Fig. 7 eine Modifikation der Fig.6.

Durch das erfindungsgemäße Steuerverfahren kann der Motor in einem großen Betriebsbereich trotz der besonderen Topologie des Leistungsstellglieds ohne Drehmomenteinbuße betrieben werden. Der Schlüssel hierzu liegt in dem vorzeitigen Schließen des Schalters $T_S$ vor dem Einleiten des Kommutierungsvorgangs vom Strang R auf den Strang S.

Die Stromregelung des Stranges R sorgt für eine Einprägung des erwünschten Stroms durch Takten des oberen Leistungsschalters $T_H$.

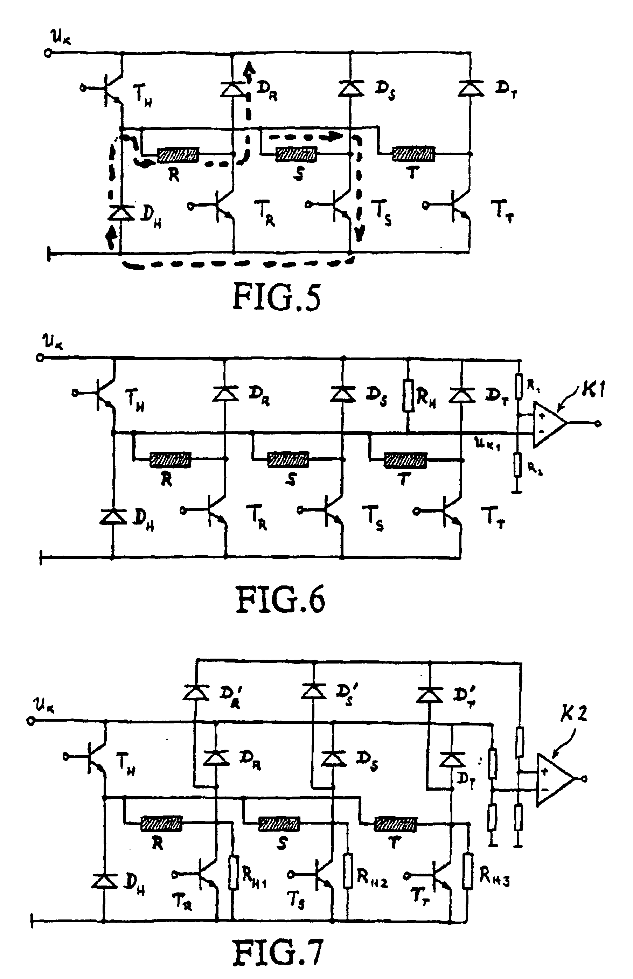

Dabei wird eine Spannungszeitfläche an den Strang gelegt, die in ihrer Größe gerade die Wirkung des Induktivitätsanstieges auf die Stromamplitude kompensiert. Die gleiche Spannungszeitfläche wird nun auch dem Strang S zugeführt, in dem einfach der Schalter $T_S$ geschlossen wird. Jene führt im Strang S zu einem kontinuierlichen Stromaufbau, da die hier wirksame Induktivität kleiner ist als die im Strang R wirksame Induktivität und hier die Wirkung eines Induktivitätsanstieges fehlt. Wird im Strang S der erwünschte Strom erreicht, wird der Schalter $T_S$ abgeschattet. Ist der Transistor $T_H$ eingeschaltet, geht der Strom über die Diode $D_S$ und dem Schalter $T_H$ in den Freilauf (s. Fig. 5). Die in der Freilaufmasche wirksame Abkommutierungsspannung ist nur die Summe der Flußspannung der genannten Diode und der des Transistors $T_H$. Unterschreitet der Strom im Strang S seinen Referenzwert, wird der Schalter $T_S$ wieder eingeschaltet. Das gilt natürlich alles, wie auch das folgende, für jede zyklische Vertauschung von R, S und T.

Beim Abschalten des Transistors $T_H$ geht der Strom im Strang S zwangsweise in den Freilauf. Je nach Schaltzustand des Transistors $T_S$ lautet die Freilaufmasche wie folgt:

$T_S$ abgeschaltet - Freilaufmasche: Strang S, Diode $D_S$, Versorgungsspannungsquelle und Diode $D_H$;
$T_S$ eingeschaltet - Freilaufmasche: Strang S, Transistor $T_S$ und Diode $D_H$.

Durch diese steuerungstechnische Maßnahme ist bei Einleitung des Abkommutierungsvorgangs im Strang R der Strang S schon voll bestromt. Diese Bestromung führt noch zu keiner unerwünschten Drehmomenterzeugung, da die Induktivität des Strangs S noch konstant bei ihrem Minimalwert verharrt.

Wird nun der Strang R zum Zeitpunkt t = $t_1$ abkommutiert, wird in geschilderter Weise der Schalter $T_H$ und $T_R$ geöffnet. Der Schalter $T_S$ bleibt aber geschlossen. Die Ströme beider Stränge gehen in den Freilauf, wobei der Strang R über die Diode $D_H$ und die Diode $D_R$ gegen die volle Versorgungsspannung abkommutiert und der Strang S nur gegen die Flußspannung der Diode $D_H$ und die Flußspannung des Schalters $T_S$ abkommutiert.

Infolge des Strangwiderstands und der beiden genannten Flußspannungen wird der Strom im Strang S zum Zeitpunkt der vollständigen Abkommutierung des Stranges R um einen gewissen Betrag abgefallen sein. Der Strom im Strang S muß nach dem Einschalten des Schalters $T_H$ nur noch um diesen Betrag bis zum gewünschten Endwert aufgebaut werden.

Wird dem Strang S vor der Abkommutierung des Stranges R ein Referenzwert vorgegeben, der um die Differenz des Stroms vor und nach der Abkommutierung erhöht ist, so führt der Strang S nach Abschluß des Kommutierungsvorgangs genau den erwünschten Strom. Ein Drehmomenteinbruch, wie er zuvor beschrieben wurde, wird vollständig vermieden.

Wichtig für die optimale Ausnutzung des Motors ist Kenntnis über den Zeitpunkt, an dem die Abkommutierung vollständig abgeschlossen ist. Wird länger als erforderlich gewartet, fällt der Strom im aufkommutierenden Strang stärker als erforderlich ab. Wird zu früh wieder eingeschaltet, kommt es zu oder oben geschilderten Verlängerung des Abkommutierungsvorangs. Beides führt zu einer Minderung der Drehmomentabgabe.

Die Detektion des Zeitpunkts des Kommutierungsabschlusses kann mit folgendem Verfahren geschehen, wobei die Sperrspannungen $U_R$, $U_S$ und $U_T$ an den drei unteren Leistungsschaltem $T_R$, $T_S$ und $T_T$ als Informationsgrößen herangezogen (s. Fig. 6).

Wird beispielsweise der Strang R abkommutiert, so prägt dessen Stranginduktivität am Schalter $T_R$ für die Dauer des Abkommutierungsvorgangs eine Sperrspannung in Höhe der Versorgungsgleichspannung ein.

Wird die Anode der Diode $D_R$ mittels $R_{H1}$ hochohmig mit Masse verbunden, so bewirkt diese Belastung nach Abschluß der Abkommutierung, daß die Sperrspannung $U_{TR}$ bei geöffnetem Leistungsschalter $T_H$ auf Null zurück fällt. Dies kann durch einen einfachen Komparator erkannt werden, dessen Schaltreferenz ca. die halbe Versorgungsspannung ist.

Pro Strang ist hier ein Komparator notwendig. Dieser Aufwand kann auf einen einzigen Komparator K2 reduziert werden. Dazu werden drei Kleinleistungsdioden $D_R$, $D_S$, $D_T$ eingeführt (s. Fig. 7). Die Anode von $D_R$ wird mit der Anode der Freilaufdiode $D_R$ verbunden und entsprechend die Anoden von $D_S$ und $D_T$ mit den Anoden von $D_S$ Die und $D_T$. Die Kathoden der drei Dioden $D_R$, $D_S$, $D_T$ werden miteinander verbunden und mit einem hochohmigen Widerstand an Masse gelegt. Die Spannung über diesem Widerstand ist die gesuchte Prüfspannung $U_{K2}$. Logisch gesehen stellen diese drei Dioden einen Maximalwertselektor dar, d. h. die größte der drei Spannungen bestimmt die Höhe der Ausgangsspannung.

Da während eines Kommutierungsvorgangs maximal zwei Stränge bestromt sind und der Leistungsschalter des nicht abzukommutierenden Stranges während der Abkommutierung dauerhaft durchgeschaltet ist, bestimmt allein der abkommutierende Strang den zeitlichen Verlauf der Spannung $U_{K2}$. Solange diese ungefähr gleich der Versorgungsgleichspannung ist, ist die Abkommutierung nicht abgeschlossen. Ist hingegen $U_{K2}$ fast Null, ist der Abkommutierungsvorgang beendet. Dies kann wieder in der geschilderten Weise durch einen einfachen Komparator erkannt werden.

## Patentansprüche

1. Verfahren zum Ansteuern eines wechselrichtergespeisten Reluktanzmotors, mit Leistungsschaltern ($T_R$, $T_S$, $T_T$ )in den Zweigen niedrigen und hohen Potentials der Motorstränge, wobei im gemeinsamen Hochpotentialzweig nur ein Leistungsschalter ($T_H$) vorgesehen ist, und mit Freilaufdioden ($D_H$, $D_R$, $D_S$, $D_T$), die die Stromanschlüsse niedrigen Potentials mit dem hohen Potential der Versorgungsspannung und den gemeinsamen Strangenschluß hohen Potentials mit dem Anschluß niedrigen Potentials der Versorgungsgleichspannung verbinden,

   **dadurch gekennzeichnet,**

   **daß** vor dem Einleiten des Kommutierungsvorgangs eines ersten Strangs ( R,S,T) <u>durch Öffnen des Leistungsschalters ($T_H$) und Öffnen des Schalters ($T_R$,$T_S$,$T_T$) im ersten Strang</u> der Schalter ($T_S$, $T_T$,$T_R$) des nächsten Strangs (S,T,R) geschlossen wird,

   so daß bei Einleitung des Abkommutierungsvorgangs im ersten Strang (R,S,T) der nächste Strang (S,T,R) bereits voll bestromt ist, d.h., der Strom in diesem Strang einen Referenzwert erreicht hat, und daß für die Dauer der Kommutierung der Schalter im Hochpotentialzweig und der Schalter des ersten Strangs ausgeschaltet und der Schalter des nächsten Strangs eingeschaltet ist.

2. Verfahren nach Anspruch 1,
   **dadurch gekennzeichnet,**
   **daß** dem nächsten Strang (S, R, T) vor der Abkommutierung des vorhergehenden Stranges (R, S, T) ein Sollwert vorgegeben wird, der um die Differenz des Stromes vor und nach der Abkommutierung erhöht ist.

3. Verfahren nach Anspruch 1 oder 2,
   **dadurch gekennzeichnet,**
   **daß** durch Einstellung der Spannungszeitfläche der Strom im Strang konstant geregelt und die Wirkung des Induktivitätsanstiegs auf die Stromamplitude kompensiert wird.

4. Verfahren nach einem der Ansprüche 1 bis 3,
   **dadurch gekennzeichnet,**
   **daß** die Spannungszeitfläche durch Takten des oberen Leistungsschalters $T_H$ eingestellt wird.

5. Verfahren nach einem der Ansprüche 1 bis 4,
   **dadurch gekennzeichnet,**
   **daß** bei hochohmig überbrückten Schaltern ($T_R$, $T_S$, $T_T$) im Niederpotentialzweig das Potential der zugehörigen Wicklungsanschlüsse überwacht wird, und auf das Ende der Kommutierung geschlossen wird, wenn das Potential aller zugehörigen Wicklungsanschlüsse näherungsweise das niedrigere Potential angenommen hat.

## Claims

1. Method for the drive control of a reluctance motor fed from a DC/AC converter, with circuit breakers ($T_R$, $T_S$, $T_T$) in the branches of low and high potential of the motor phases, wherein only one circuit breaker ($T_H$) is provided in the common high-potential branch, and with freewheel diodes ($D_H$, $D_R$, $D_S$, $T_T$), which connect the phase connections of low potential with the high potential of the supply voltage and the common phase connection of high potential with the connection of low potential of the DC supply voltage, **characterised thereby, that** before the initiation of the commutation process of a first phase (R, S, T) by opening of the circuit breaker ($T_H$) and opening of the switches ($T_R$, $T_S$, $T_T$) in the first phase the switch ($T_S$, $T_T$, $T_R$,) of the next phase (S, T, R) is closed so that the next phase (S, T, R) carries full current already on initiation of the off-commutation process in the first phase (R, S, T), i.e. the current in this phase has reached a reference value, and that the switch in the high potential branch and the switch of the first phase are switched off and the switch of the next phase is switched on for the duration of the commutation.

2. Method according to claim 1, **characterised thereby, that** a target value, which is increased by the difference in current between before and after the off-commutation, is preset for the next phase (S, T, R) before the off-commutation of the preceding phase.

3. Method according to claim 1 or 2, **characterised thereby, that** the current in the phase is regulated to be constant by setting of the voltage-time area and the influence of the rise in inductance on the current amplitude is compensated for.

4. Method according to one of the claims 1 to 3, **characterised thereby, that** the voltage-time area is set by keying of the upper circuit breaker ($T_H$).

5. Method according to one of the claims 1 to 4, **characterised thereby, that** in the case of switches ($T_R$, $T_S$, $T_T$) being bridged over by high resistance in the low-potential branch, the potential of the associated winding connections is monitored and a conclusion is drawn that the commutation has ended when the potential of all associated winding connections has assumed the lower potential approximately.

## Revendications

1. Procédé pour la commande d'un moteur à réluctance alimenté par onduleur, comprenant des interrupteurs de puissance ($T_R$, $T_S$, $T_T$) dans les branchements de potentiels élevé et bas des phases de moteur, où est prévu dans le branchement commun de potentiel élevé seulement un interrupteur de puissance ($T_H$), et comprenant des diodes de libre circulation ($D_H$, $D_R$, $D_S$, $D_T$) qui relient les raccordements de phase de faible potentiel au potentiel élevé de la tension d'alimentation et le raccordement commun de phase de potentiel élevé avec le raccordement de faible potentiel de la tension continue d'alimentation, **caractérisé en ce qu'**avant l'amorce de l'opération de commutation d'une première phase (R,S,T), par l'ouverture de l'interrupteur de puissance ($T_H$) et l'ouverture de l'interrupteur ($T_R$, $T_S$, $T_T$) dans la première phase, l'interrupteur ($T_S$, $T_T$, $T_R$) de la phase suivante (S,T,R) est fermé de sorte que lors de l'amorce de l'opération de décommutation dans une première phase (R,S,T) la phase suivante (S,T,R) est déjà complètement alimentée en courant, c'est-à-dire le courant dans cette phase a atteint une valeur de référence, et **en ce que**, pour la durée de la commutation, l'interrupteur dans le branchement de potentiel élevé et l'interrupteur de la première phase sont déconnectés, et l'interrupteur de la phase suivante est connecté.

2. Procédé selon la revendication 1, **caractérisé en ce qu'**à la phase suivante (S,R,T) avant la décommutation de la phase précédente (R,S,T), est prédéterminée une valeur de consigne qui est augmentée de la différence du courant avant et après la décommutation.

3. Procédé selon la revendication 1 ou 2, **caractérisé en ce que**, par réglage de la surface tension-temps, le courant est régulé constamment dans la phase et l'effet de l'augmentation d'inductance sur l'amplitude du courant est compensé.

4. Procédé selon l'une des revendications 1 à 3, **caractérisé en ce que** la surface tension-temps est réglée par synchronisation de l'interrupteur supérieur de puissance $T_H$.

5. Procédé selon l'une des revendications 1 à 4, **caractérisé en ce que** dans le cas d'interrupteurs ($T_R$, $T_S$, $T_T$), pontés à des valeurs ohmiques élevées, dans le branchement de bas potentiel, le potentiel des raccordements respectifs d'enroulement est surveillé et est fermé à la fin de la commutation, si le potentiel de tous les raccordements respectifs d'enroulement a approximativement accepté le potentiel plus faible.

FIG.1

FIG.2

6

FIG.3

FIG.4

FIG.5

FIG.6

FIG.7